# EUROPEAN PATENT APPLICATION

(11) **EP 4 775 294 A1**
(43) Date of publication of application: **15.07.2026**
(21) Application number: 25306927.2
(22) Date of filing: 19.11.2025
(51) Int. Cl.: B01D 53/04

(54) **EQUALIZING GAS FLOW DISTRIBUTION OF GAS PROCESSING COLUMN**

(30) Priority: 08.01.2025 EP 25305019
(71) Applicant: Technip Energies France, 92741 Nanterre Cedex (FR)
(72) Inventor: SAMUELSEN, Eirik, 92741 Nanterre Cedex (FR)
(74) Representative: Edson, Russell Gregory

(57) **Abstract**

A system for uniformly distributing a gas flow in a processing chamber of a gas processing column having other than a centered top gas outlet is disclosed. The system may include a gas distribution plate installed within an internal volume of the processing chamber and in a path of a gas flow. The gas distribution plate can include a plurality of gas apertures that are arranged along the gas distribution plate and extend therethrough. An aperture area is defined by the plurality of gas apertures and the gas distribution plate is configured such that the aperture area increases along a first end-to-second end direction of the gas distribution plate. Locating the gas distribution plate in the internal volume of the processing chamber so that the first end of the gas distribution plate is closer to the gas outlet can cause the gas flow through the processing chamber to be uniformly distributed.

## Description

### Technical Field

The present disclosure relates generally to gas processing, and more particularly although not necessarily exclusively, to equalizing the distribution of a gas flow through a gas processing column having other than a centered top gas outlet.

### Background

A gas processing column may be used, for example, to clean or otherwise treat a gas. For example, a waste gas stream may be treated in a gas processing column using a packed bed or another treatment mechanism. One example of such a gas processing column is an absorption column. Typical gas processing columns have a centered top gas outlet, and a substantially uniform distribution of the gas can flow upward through the gas processing column from a gas inlet to the gas outlet while being treated. It may be desirable or necessary in other examples, such as due to space constraints, to provide a gas distribution column with an off-center top gas outlet or a side-located gas outlet.

### Summary

As used below, any reference to a series of examples is to be understood as a reference to each of those examples disjunctively (e.g., "Examples 1-4" or "Examples 1 to 4" is to be understood as "Examples 1, 2, 3, or 4").

Example No. 1 is a gas processing column including a column shell having an internal volume separated into a processing chamber with a gas inlet and an exhaust chamber with a gas outlet. The exhaust chamber is fluidly connected to the processing chamber. The gas processing column also includes a gas distribution plate having a first end and a second end, and one or more gas apertures that are arranged along the gas distribution plate and extend therethrough. An aperture area of the gas distribution plate is defined by the one or more gas apertures and increases along a first end-to-second end direction of the gas distribution plate. The gas distribution plate is positioned in the processing chamber, and is oriented such that the first end of the gas distribution plate is closer to the gas outlet than the second end.

Example No. 2 is Example No. 1, wherein walls of the processing chamber and the exhaust chamber collectively define a gas flow path through the column shell that extends from the gas inlet, through the one or more gas apertures in the gas distribution plate, to the gas outlet.

Example No. 3 is any one of Example No. 1 to Example No. 3, wherein the one or more gas apertures of the gas distribution plate are positioned within the gas flow path to reduce a flow rate of a portion of the gas flow that is closer to the gas outlet while increasing a flow rate of a portion of the gas flow that is farther away from the gas outlet.

Example No. 4 is any one of Example No. 1 to Example No. 3, wherein the gas distribution plate is located in the processing chamber upstream of a gas passageway through a dividing wall that separates the processing chamber from the exhaust chamber.

Example No. 5 is any one of Example No. 1 to Example No. 4, wherein the one or more gas apertures is a plurality of gas apertures.

Example No. 6 is Example No. 5, wherein a frequency of occurrence of the plurality of gas apertures increases along a first end-to-second end direction of the gas distribution plate. The plurality of gas apertures may all be uniform in size.

Example No. 7 is Example No. 5, wherein the plurality of gas apertures are non-uniform in size, and the size of the plurality of gas apertures increases along a first end-to-second end direction of the gas distribution plate.

Example No. 8 is any one of Example No. 1 to Example No. 4, wherein the one or more gas apertures is a single gas aperture that converges toward the first end of the gas distribution plate and diverges toward the second end of the gas distribution plate.

Example No. 9 is a gas processing column including a column shell extending along a central axis and having an internal volume with a gas inlet entering into a lower portion thereof and a gas outlet passing through a top wall of the column shell and offset from the central axis. The gas processing column also includes a gas distribution plate having a first end and a second end, and one or more gas apertures that are arranged along the gas distribution plate and extend therethrough. An aperture area of the gas distribution plate is defined by the one or more gas apertures and increases along a first end-to-second end direction of the gas distribution plate. The gas distribution plate is positioned in the internal volume and is oriented such that the first end of the gas distribution plate is closer to the gas outlet than the second end.

Example No. 10 is Example No. 9, wherein walls of the column shell define a gas flow path through the column shell that extends from the gas inlet, through the one or more gas apertures in the gas distribution plate, to the gas outlet.

Example No. 11 is Example No. 9 or Example No. 10, wherein the one or more gas apertures are positioned within the gas flow path to reduce a flow rate of a portion of the gas flow that is closer to the gas outlet while increasing a flow rate of a portion of the gas flow that is farther away from the gas outlet.

Example No. 12 is any one of Example No. 9 to Example No. 11, wherein the one or more gas apertures is a plurality of gas apertures.

Example No. 13 is Example No. 12, wherein the plurality of gas apertures in the gas distribution plate are all uniform in size and a frequency of occurrence of the plurality of gas apertures increases along a first end-to-second end direction of the gas distribution plate.

Example No. 14 is Example No. 12, wherein the plurality of gas apertures in the gas distribution plate are non-uniform in size and the size of the plurality of gas apertures increases along a first end-to-second end direction of the gas distribution plate.

Example No. 15 is any one of Example No. 9 to Example No. 11, wherein the one or more gas apertures is a single gas aperture that converges toward a first end of the gas distribution plate and diverges toward the second end of the gas distribution plate.

Example No. 16 is a method of uniformly distributing a gas flow in a gas processing column having other than a centered top gas outlet. A gas distribution plate is located within an internal volume of the gas processing column and in a gas flow path thereof. The gas distribution plate includes one or more gas apertures arranged along the gas distribution plate between a first end and a second end thereof and extending through the gas distribution plate. An aperture area of the gas distribution plate is defined by the one or more gas apertures and increases along a first end-to-second end direction of the gas distribution plate. The gas distribution plate is positioned in the internal volume upstream of the gas outlet and is oriented such that the first end of the gas distribution plate is closer to the gas outlet than the second end so as to cause a uniform distribution of the gas flow through the internal volume. The method includes passing a gas flow through the internal volume of the gas processing column along a gas flow path from a gas inlet through the gas distribution plate to the gas outlet.

Example No. 17 is Example No. 16, wherein the one or more gas apertures of the gas distribution plate reduces a flow rate of a portion of the gas flow that is closer to the gas outlet and increases a flow rate of a portion of the gas flow that is farther away from the gas outlet.

Example No. 18 is Example No. 16 or Example No. 17, wherein the one or more gas apertures is a plurality of gas apertures.

Example No. 19 is Example No. 18, wherein the plurality of gas apertures are all uniform in size, and a frequency of occurrence of the plurality of gas apertures increases along a first end-to-second end direction of the gas distribution plate.

Example No. 20 is Example No. 18, wherein the plurality of gas apertures are non-uniform in size, and the size of the plurality of gas apertures increases along a first end-to-second end direction of the gas distribution plate.

Example No. 21 is Example No. 16 or Example No. 17, wherein the one or more gas apertures is a single gas aperture that converges toward a first end of the gas distribution plate and diverges toward the second end of the gas distribution plate.

### Brief Description of the Drawings

FIG. 1 is a schematic representation of a gas processing column having a gas distribution plate according to one example configuration.
FIG. 2A is a schematic representation of a gas distribution plate according to one example configuration.
FIG. 2B is a schematic representation of another gas distribution plate according to another example configuration.
FIG. 2C is a schematic representation of another gas distribution plate according to another example configuration.
FIG. 3 is a schematic representation of another gas processing column having a gas distribution plate according to another example configuration.
FIG. 4 is a flowchart illustrating a method of equalizing a gas flow distribution in a gas processing column.

### Detailed Description

Certain aspects and examples of the present disclosure relate to a gas distribution plate that is usable in a gas processing column to prevent gas flow maldistribution problems that can result from gas outlets other than centered top gas outlets (e.g., off-center top gas outlets or side-located gas outlets). According to one example configuration, the gas distribution plate can have a first end and a second end, and one or more gas apertures may be arranged along the gas distribution plate between the first end and the second end. The one or more gas apertures may extend through the gas distribution plate to provide a gas pathway therethrough. The one or more gas apertures may define an aperture area, which can increase along a first end-to-second end direction of the gas distribution plate. The gas distribution plate may be disposed in an internal volume of the gas processing column and may be oriented such that the first end of the gas distribution plate is closer to a gas outlet of the gas processing column than the second end.

When a gas processing column includes, for example, a side gas outlet or an off-center top gas outlet, the gas flow through the gas processing column can be biased toward the gas outlet side of the gas processing column. This can cause a non-uniform gas flow, where portions of the gas flow that are farther away from the gas outlet may be drawn to or toward the gas outlet side of the gas processing column prior to passing completely through the gas processing column. When the gas processing column is, for example, an absorption column or otherwise includes a packed bed, this can cause the gas flow to pass through the packed bed in a non-uniform manner and may detrimentally affect treatment of the gas flow by the packed bed. A uniform gas flow through the gas processing column can be facilitated by installing an example gas distribution plate into the gas flow path within the gas processing column. The gas distribution plate can reduce a flow rate of the portion of the gas flow that is closer to the gas outlet while increasing a flow rate of a portion of the gas flow that is farther away from the gas outlet, thereby facilitating a uniform gas flow through the gas processing column (and when present, a packed bed in the gas processing column).

The gas processing column may include, for example, a column shell having an internal volume bounded by a bottom wall, a top wall, and at least one side wall. In some examples, the gas processing column may have a circular cross-sectional shape. In some examples, the gas processing column may have a square cross-sectional shape, a rectangular cross-sectional shape, or another cross-sectional shape.

In some examples, the internal volume of the gas processing column may be separated into a processing chamber and an exhaust chamber, such as by a dividing wall. In such an example, a gas passageway may pass through the dividing wall, such as at or near a top thereof, and may fluidly connect the processing chamber to the exhaust chamber so that a gas flow can traverse the processing chamber and then pass into and through the exhaust chamber for discharge from the gas processing column. In such an example, a gas inlet can pass through the column shell and into the processing chamber such that the gas flow can be introduced into the gas processing column through the gas inlet. The gas inlet may, for example, be located near or in a bottom of the gas processing column. In such an example, a gas outlet may pass through the column shell and into the exhaust chamber. In an example, the gas outlet may also be located near the bottom of the gas processing column, or may be otherwise located so that the gas flow can flow in one direction through the processing chamber, pass through the gas passageway in the dividing wall, and then proceed in an opposite direction through the exhaust chamber to the gas outlet.

In another example, the gas processing column may have a gas outlet that is located in a top of the gas processing column but offset from a central axis of the column shell. In such an example, a gas inlet can pass through the column shell and into the internal volume thereof. For example, the gas inlet may be located in a side wall and near a bottom of the column shell such that a gas flow can be introduced into the gas inlet and thereafter flow upward through the gas processing column to exit the gas outlet.

In some examples, the gas distribution plate may have only a single gas aperture. In such an example, the size (area) of the gas aperture can increase in a first end-to-second end direction of the gas distribution plate to produce a desired effect on the gas flow when installed into a gas processing column. For example, the gas distribution plate may include a single gas aperture having a geometric shape that converges toward the first end of the plate and diverges towards the second end of the plate. In the case of a gas distribution plate having a plurality of gas apertures, the gas plurality of apertures may be uniform in size, and a frequency of occurrence of the plurality of gas apertures can increase along a first end-to-second end direction of the gas distribution plate to produce a desired effect on the gas flow when installed into a gas processing column. In some examples, the plurality of gas apertures may be non-uniform in size, and the size of the plurality of gas apertures can increases along a first end-to-second end direction of the gas distribution plate to produce a desired effect on the gas flow when installed into a gas processing column. In some examples, a plurality of gas apertures may be present and each gas aperture of the plurality of gas apertures may have the same shape, while in other examples, at least some of the gas apertures may be of dissimilar shape. In some examples, the gas distribution plate may be made of the same material as the column shell of a gas processing column into which the gas distribution plate will be installed.

Illustrative examples follow and are given to introduce the reader to the general subject matter discussed herein rather than to limit the scope of the disclosed concepts. The following sections describe various additional features and examples with reference to the drawings in which like numerals indicate like elements, and directional descriptions are used to describe the illustrative aspects, but, like the illustrative aspects, should not be used to limit the present disclosure.

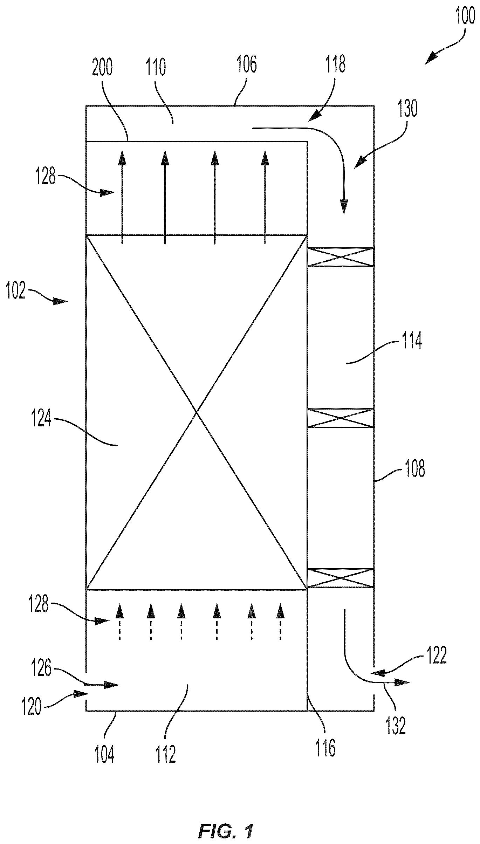

FIG. 1 schematically represents a gas processing column 100 having a gas distribution plate 200 according to one example configuration. In this example, the gas processing column 100 includes a column shell 102 having a bottom wall 104, a top wall 106, and at least one side wall 108. For example, when the gas processing column 100 has circular cross-sectional shape, the gas processing column 100 may have one continuous side wall. Alternatively when the gas processing column 100 has a square or rectangular shape, for example, multiple side walls may be present. The bottom wall 104, the top wall 106, and the at least one side wall 108 of the column shell 102 collectively define an internal volume 110 of the column shell 102.

In this example of the gas processing column 100, the internal volume 110 is separated into a processing chamber 112 and an exhaust chamber 114 by a dividing wall 116. As shown, the dividing wall 116 may extend from the bottom wall 104 to the top wall 106 of the column shell 102 so that the processing chamber 112 and the exhaust chamber 114 are isolated from one another by the dividing wall 116. A degree of fluid communication between the processing chamber 112 and the exhaust chamber 114 may intentionally be provided by at least one gas passageway 118 that passes through the dividing wall 116. As shown, the gas passageway 118 may pass through the dividing wall 116 near a top thereof in this example.

A gas inlet 120 may pass through the column shell 102 at a location such that the gas inlet 120 enters processing chamber 112. In this example, the gas inlet 120 passes through the at least one side wall 108 and is also located near the bottom of the column shell 102, but may be located otherwise in other examples. Similarly, a gas outlet 122 may pass through the column shell 102 at a location such that the gas outlet 122 enters the exhaust chamber 114. In this example, the gas outlet 122 also passes through the at least one side wall 108 and is thus a side outlet rather than a typical top outlet. In some examples, a packed bed 124 or another gas treatment apparatus may be located within the internal volume 110 of the column shell 102 to treat (e.g., scrub) gas that is passed through the gas processing column 100. For example, the gas processing column 100 may be an absorption column.

A gas 126 to be treated (e.g., scrubbed) can be introduced into the gas processing column 100 through the gas inlet 120. Given the location of the gas inlet 120, a gas flow 128 may thereafter travel upward through the processing chamber 112, where it can pass through the packed bed 124 and through the gas passageway 118, and can then become an exhaust gas flow 130 that travels downward within the exhaust chamber 114 before exiting the column shell 102 through the gas outlet 122 as a discharge gas stream 132.

When a gas processing column, such as the gas processing column 100, includes a side gas outlet, such as the gas outlet 122, the gas flow 128 that is initially substantially evenly distributed within the processing chamber 112 of the gas processing column 100 can become maldistributed. More specifically, portions of the gas flow 128 in the processing chamber 112 that are farther away from the gas outlet 122 can be drawn to or toward the gas outlet 122 side of the processing chamber 112 while traveling therethrough due to a pressure drop, which is based on the flow rate of the gas flow 128. This can cause the gas flow 128 in the processing chamber 112 to become more non-uniformly distributed across the processing chamber 112 as the gas flow 128 travels upward. Resultantly, more of the gas flow 128 may pass through an area of the packed bed 124 that resides closer to the gas outlet 122 and less (or possibly none) of the gas flow 128 may pass through an area of the packed bed 124 that resides farther away from the gas outlet 122. Such a maldistribution of the gas flow 128 through the packed bed 124 may detrimentally affect treatment of the gas flow 128 by the packed bed 124. As illustrated in FIG. 1, installing the gas distribution plate 200 in the processing chamber 112 and in the path of the gas flow 128 therethrough can prevent such a maldistributed gas flow 128.

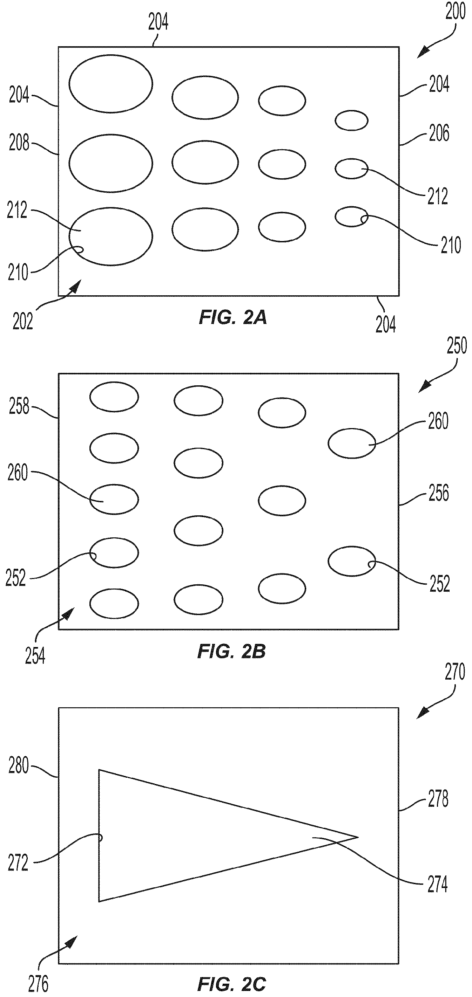

FIG. 2A depicts one example of the gas distribution plate 200 in more detail. As shown, the gas distribution plate 200 may be, but is not necessarily required to be, a substantially flat plate. The gas distribution plate 200 may have a first face 202 that is intended to face the gas flow 128 of the processing chamber 112 of FIG. 1 and a second face (not visible) opposite the first face 202, although the faces may be reversible in orientation in this and other examples. In some examples, the gas distribution plate 200 may be made of the same material as the other internal components of the gas processing column 100 of FIG. 1. For example, the gas distribution plate 200 may be made of stainless steel (e.g., SS316 or SS304), carbon steel, plastic, etc., and the material from which the gas distribution plate 200 is made may be application dependent. The shape of the gas distribution plate 200 may match the shape of the processing chamber 112 (or the shape of the column shell 102 or another portion of the gas processing column 100 into which the gas distribution plate 200 will be installed). For example, the cross-sectional shape of the gas distribution plate 200 in a plane that is parallel to the first face 202 may be circular, square, rectangular, or another shape. When installed, a peripheral edge(s) 204 of the gas distribution plate 200 may form a seal with an interior surface of the at least one side wall 108 of the processing chamber 112 (or with an interior surface of another gas processing column 100 wall(s) at the installation location). In some examples, the gas distribution plate 200 can be fixed to the processing chamber 112 by fasteners (e.g., threaded fasteners) or by welding.

The gas distribution plate 200 may also include a first end 206 and a second end 208 opposite the first end 206. A plurality of gas apertures 210 may be arranged along the gas distribution plate 200 between the first end 206 and the second end 208 and may extend through the gas distribution plate 200 from the first face 202 to the opposite second face. Each gas aperture 210 defines an aperture area 212 (i.e., an opening area) of the gas distribution plate 200, and the plurality of gas apertures 210 collectively define an overall aperture area of the gas distribution plate 200. The aperture area of the gas distribution plate 200, and the sizes and arrangement of the individual gas apertures 210, determines the gas flow capacity and gas distributing characteristics of the gas distribution plate 200. In some examples, the size(s) and arrangement of the individual gas apertures 210 may be a function of the internal size of the processing chamber 112 (or other location of gas distribution plate installation), gas flow rate, and pressure drop.

As illustrated in FIG. 2A, the gas apertures 210 may be non-uniform in size and may be arranged in rows that may be, but are not required to be, substantially parallel to the first end 206 and the second end 208 of the gas distribution plate 200. In such an example, the sizes of the plurality of gas apertures 210 can increases along a first end-to-second end direction of the gas distribution plate 200 to produce a desired effect on the gas flow 128 when the gas distribution plate 200 is installed into the processing chamber 112. Particularly, the gas apertures 210 closer to the first end 206 of the gas distribution plate 200 can be smaller than the gas apertures 210 that are closer to the second end 208 of the gas distribution plate 200.

The gas distribution plate 200 can be positioned in the processing chamber 112 at a location upstream of the gas passageway 118 so that the gas flow 128 will pass through the gas distribution plate before reaching the gas passageway 118. While the gas distribution plate 200 is shown to be located substantially at the gas passageway 118 in this example, it may also be possible to locate the gas distribution plate 200 closer to the downstream end of the packed bed 124 in other examples. The gas distribution plate 200 is oriented within the processing chamber 112 such that the first end 206 of the gas distribution plate 200 is closer to the gas outlet 122 than the second end 208 of the gas distribution plate 200. Thus, the gas apertures 210 of smaller size are also located closer to the gas outlet 122 than are the gas apertures 210 of larger size. Due to the difference in size of the gas apertures 210 and their arrangement along the gas distribution plate 200, locating the gas distribution plate 200 in the processing chamber 112 in the described orientation can have the effect of reducing a flow rate of the portion of the gas flow 128 that is closer to the gas outlet 122 while increasing a flow rate of a portion of the gas flow 128 that is farther away from the gas outlet. This can cause the gas flow 128 to be uniformly distributed through the processing chamber 112 and through the packed bed 124 located therein, as indicated in FIG. 1.

FIG. 2B depicts an alternative configuration of a gas distribution plate 250 by which a like or similar effect on the gas flow 128 in the processing chamber 112 may also be achieved. As illustrated therein, the gas distribution plate 250 can alternatively include a plurality of gas apertures 252 that are all uniform in size. The gas apertures 252 may again pass through the gas distribution plate 250 from a first face 254 to a second opposite face (not visible). The gas apertures 252 may also again be arranged in rows that may be but are not required to be substantially parallel to a first end 256 and a second end 258 of the gas distribution plate 250. Each gas aperture 252 again defines an aperture area 260 (i.e., an opening area) of the gas distribution plate 250 and the plurality of gas apertures 252 collectively define an overall aperture area of the gas distribution plate 250. The aperture area of the gas distribution plate 250, and the sizes and arrangement of the individual gas apertures 252, again determines the gas flow capacity and gas distributing characteristics of the gas distribution plate 250. Characteristics of the gas distribution plate 200 of FIG. 2A (other than those associated with the gas apertures 210) and not specifically described herein relative to the gas distribution plate 250 of FIG. 2B are also applicable to the gas distribution plate 250.

In the example of the gas distribution plate 250, the size of the plurality of gas apertures 252 remains the same along a first end-to-second end direction of the gas distribution plate 250. Thus, to produce the above-described desired effect on the gas flow 128 when the gas distribution plate 250 is installed into the processing chamber 112, the frequency of occurrence of the gas apertures 252 can increase along the first end-to-second end direction of the gas distribution plate 250. For example, the row of gas apertures 252 closest to the first end 256 of the gas distribution plate 250 includes only two gas apertures 252 in this example, while the row of gas apertures 252 closest to the second end 258 of the gas distribution plate 250 includes five gas apertures 252. The number of gas apertures 252 in each row (or other arrangement of the gas apertures) and the total number of gas apertures 252 provided may vary in other examples. As a result of such a configuration shown in FIG. 2B, installation of the gas distribution plate 250 into the processing chamber 112 with the first end 256 of the gas distribution plate 250 closer to the gas outlet 122 can have the same or a similar effect on the gas flow 128 through the processing chamber 112 as described above relative to the gas distribution plate 200 of FIG. 2A.

FIG. 2C depicts another alternative configuration of a gas distribution plate 270 by which a like or similar effect on the gas flow 128 in the processing chamber 112 may also be achieved. The gas distribution plate 270 of FIG. 2C illustrates that it is also possible to achieve a desired effect on the gas flow 128 using only a single gas aperture 272. In the example shown, the gas aperture 270 is triangular in shape, but other shapes are possible in other examples of single-gas aperture gas distribution plates. The gas aperture 272 defines an aperture area 274 (i.e., an opening area) in the gas distribution plate 270. The gas aperture 272 may pass through the gas distribution plate 270 from a first face 276 to a second opposite face (not visible).

The gas distribution plate 270 may include a first end 278 and a second end 280. As illustrated, when a single gas aperture 272 is used, the aperture area 274 increases in a first end-to-second end direction. Thus, in this example, the gas aperture 272 is arranged with a point of its triangular shape near the first end 278 and a base of its triangular shape near the second end 280. The area of the gas aperture 272 determines the gas flow capacity and gas distributing characteristics of the gas distribution plate 270. Characteristics of the gas distribution plate 200 of FIG. 2A (other than those associated with the gas apertures 210) and not specifically described herein relative to the gas distribution plate 270 of FIG. 2C are also applicable to the gas distribution plate 270. As a result of the configuration shown in FIG. 2C, installation of the gas distribution plate 270 into the processing chamber 112 with the first end 278 of the gas distribution plate 270 closer to the gas outlet 122, can have the same or a similar effect on the gas flow 128 through the processing chamber 112 as described above relative to the gas distribution plate 200 of FIG. 2A.

In examples of a gas distribution plate having multiple gas apertures, each of the plurality of gas apertures may have the same shape. In other examples, at least some of the plurality of gas apertures in a gas distribution plate having multiple gas apertures may be of dissimilar shape. There is no particular limitation on the shape of the gas apertures. For example, while the gas apertures 210 of FIG. 2A and the gas apertures 252 of FIG. 2B are shown to be elliptical in shape, and the gas aperture 272 of FIG. 2C is shown to be of triangular shape, the gas apertures of other gas distribution plate examples may instead have a round shape, and obround shape, or a polygonal shape.

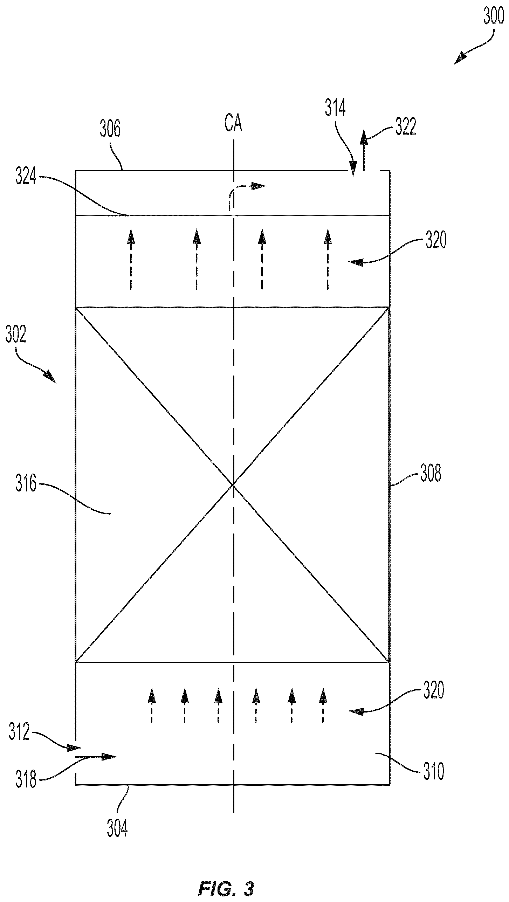

FIG. 3 schematically represents another example of a gas processing column 300 according to another example configuration. In this example, the gas processing column 300 again includes a column shell 302 having a bottom wall 304, a top wall 306, and at least one side wall 308. For example, when the gas processing column 300 has circular cross-sectional shape, the gas processing column 300 may have one continuous side wall. Alternatively, when the gas processing column 300 has a square or rectangular shape, for example, multiple side walls may be present. The bottom wall 304, the top wall 306, and the at least one side wall 308 of the column shell 302 collectively define an internal volume 310 of the column shell 302.

In this example, a gas inlet 312 may pass through the column shell 302 and into the internal volume 310. The gas inlet 312 passes through the at least one side wall 308 and is located near the bottom of the column shell 302 in this example, but may be otherwise located in other examples. Similarly, a gas outlet 314 may pass through the top wall 306 of the column shell 302 and into the internal volume 310. The gas outlet 314 may be offset from a central axis CA of the column shell 302 as shown. In some examples, a packed bed 316 or another gas treatment apparatus may be located within the internal volume 310 of the column shell 302 to treat (e.g., scrub) gas that is passed through the gas processing column 300. For example, the gas processing column 300 may be an absorption column.

A flow of a gas 318 to be treated (e.g., scrubbed) can be introduced into the gas processing column 300 through the gas inlet 312. Given the location of the gas inlet 312, a gas flow 320 may thereafter travel upward through the internal volume 310 where it can pass through the packed bed 316 and then exit the column shell 302 through the gas outlet 314 as a discharge gas stream 322.

The offset top gas outlet 314 of the gas processing column 300 may cause the gas flow 320 through the internal volume 310 and the packed bed 316 to be maldistributed in a manner similar to that described above with respect to the gas processing column 100 of FIG. 1. More specifically, while the gas flow 320 may be initially evenly distributed across the internal volume 310 of the column shell 302, portions of the gas flow 320 that are farther away from the gas outlet 314 (i.e., closer to the gas inlet 312 side of the column shell 302) can be drawn to or toward the gas outlet 314 side of the internal volume 310 while traveling upward therethrough. This can cause the gas flow 320 to become more non-uniformly distributed across the internal volume 310 as the gas flow 320 travels upward, and may result in more of the gas flow 320 passing through an area of the packed bed 316 that resides closer to the gas outlet 314 and less (or possibly none) of the gas flow 320 passing through an area of the packed bed 316 that resides farther away from the gas outlet 314. Passage of the gas flow 320 through the packed bed 316 in such a maldistributed manner may detrimentally affect treatment of the gas flow 320 by the packed bed 316. As illustrated in FIG. 3, locating a gas distribution plate 324 in the internal volume 310 and in the path of the gas flow 320 therethrough can prevent such a maldistributed gas flow 320.

The gas distribution plate 324 may include one or more gas apertures to cause the gas flow 320 to be uniformly distributed. In some examples, the gas distribution plate 324 can have a configuration like that of the gas distribution plate 200 of FIG. 2A, the gas distribution plate 250 of FIG. 2B, or the gas distribution plate 270 of FIG. 2C. The gas distribution plate 324 may instead have another configuration of a plurality of gas apertures. In any case, the gas distribution plate 324 can be configured, located, and oriented in the internal volume 310 and in the path of the gas flow 320 to uniformly distribute the gas flow 320 through the internal volume 310 and through the packed bed 316 in the manner described above with respect to the gas processing column 100 of FIG. 1.

In examples, the column shell is the processing chamber, and the processing chamber has a gas outlet exiting an upper portion thereof. In these examples, the gas processing column has a central axis, and the gas outlet of the processing chamber is offset from said central axis. In other words, the gas outlet is not a centered top gas outlet but is positioned to one side of the central axis. This configuration is shown in FIG. 1 and FIG. 3. The gas outlet may be located on a side wall on the upper portion of the processing chamber as shown by feature 118 in FIG. 1, or it may be located on a top wall of the gas processing chamber, as shown by feature 314 in FIG. 3. The gas distribution plate is positioned in the same way as previous examples. It is advantageous to configure the distribution plate in reference to the position of the gas outlet exiting the upper portion, as explained for previous examples, in order to uniformly distribute the gas flow through the internal volume.

In examples where there is an exhaust chamber, the gas outlet of the processing chamber may provide a fluid connection to the exhaust chamber from the processing chamber. As shown in the example in FIG. 1, the exhaust chamber may be fluidly connected to the processing chamber via the gas outlet 118 of the processing chamber. The exhaust chamber has a second gas outlet 122.

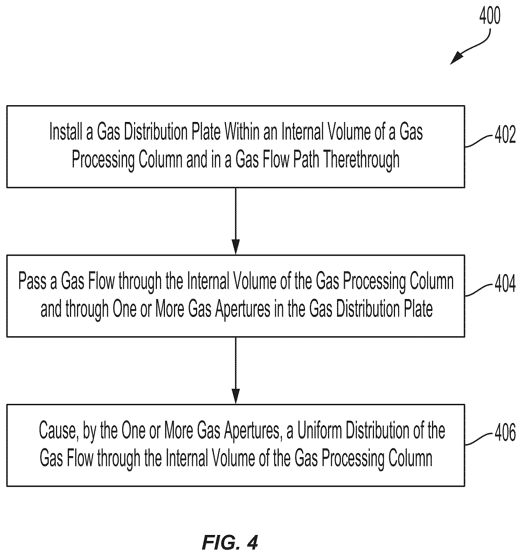

FIG. 4 is a flowchart 400 illustrating a method of uniformly distributing a gas flow in a gas processing column having other than a centered top gas outlet. As indicated in block 402, a gas distribution plate may be located within an internal volume of the gas processing column and in a gas flow path therethrough. The gas distribution plate can include one or more gas apertures that may be arranged along the gas distribution plate between a first end and a second end thereof. The one or more gas apertures can extend through the gas distribution plate from a first face to a second face. An aperture area is defined by the one or more gas apertures and the aperture area can increase along a first end-to-second end direction of the gas distribution plate. The gas distribution plate can be installed in the internal volume upstream of the gas outlet and can be oriented such that the first end of the gas distribution plate is closer to the gas outlet than the second end. In an example where only a single gas aperture is present, the gas aperture in the gas distribution plate can increase in area in a first end-to-second end direction of the gas distribution plate. In some examples where a plurality of gas apertures are present, the plurality of gas apertures in the gas distribution plate can all be uniform in size, and a frequency of occurrence of the plurality of gas apertures may increase along a first end-to-second end direction of the gas distribution plate. In other examples, the plurality of gas apertures in the gas distribution plate may be non-uniform in size, and the size of the plurality of gas apertures can increase along a first end-to-second end direction of the gas distribution plate. In some examples, the gas apertures may all be the same shape. In other examples, at least some of the gas apertures may be of dissimilar shape.

As indicated in block 404, a gas flow can be passed through the internal volume of the gas processing column and through the plurality of gas apertures in the gas distribution plate. The gas may be, for example, a waste gas that is to be scrubbed or otherwise treated in the gas processing column. To that end, the gas processing column may be an absorption column or may otherwise have a packed bed located in the internal volume to treat the gas flow.

As indicated in block 406, the gas flow can be caused, by the plurality of the gas apertures in the gas distribution plate, to flow uniformly through the internal volume of the gas processing column. Thus, the gas flow can also be caused to flow uniformly through a packed bed located in the internal volume of the gas processing column. The one or more gas apertures in the gas distribution plate can cause the gas flow to flow uniformly through the internal volume by, for example, reducing a flow rate of a portion of the gas flow that is closer to the gas outlet while increasing a flow rate of a portion of the gas flow that is farther away from the gas outlet.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure.

The present invention may also be described or defined in accordance with one or more of the following clauses:
1. A gas processing column comprising:
   a column shell having an internal volume separated into a processing chamber with a gas inlet and an exhaust chamber with a gas outlet, the exhaust chamber fluidly connected to the processing chamber;
   a gas distribution plate having a first end and a second end, and one or more gas apertures that are arranged along the gas distribution plate and extend therethrough;
   wherein an aperture area of the gas distribution plate is defined by the one or more gas apertures and increases along a first end-to-second end direction of the gas distribution plate; and
   wherein the gas distribution plate is positioned in the processing chamber, and is oriented such that the first end of the gas distribution plate is closer to the gas outlet than the second end.
2. The gas processing column of clause 1, wherein walls of the processing chamber and the exhaust chamber collectively define a gas flow path through the column shell that extends from the gas inlet, through the one or more gas apertures in the gas distribution plate, to the gas outlet; optionally, wherein the one or more gas apertures of the gas distribution plate are positioned within the gas flow path to reduce a flow rate of a portion of the gas flow that is closer to the gas outlet while increasing a flow rate of a portion of the gas flow that is farther away from the gas outlet.
3. The gas processing column of clause 1, wherein the gas distribution plate is located in the processing chamber upstream of a gas passageway through a dividing wall that separates the processing chamber from the exhaust chamber.
4. The gas processing column of clause 1, wherein the one or more gas apertures is a plurality of gas apertures; optionally, wherein the plurality of gas apertures are all uniform in size and a frequency of occurrence of the plurality of gas apertures increases along a first end-to-second end direction of the gas distribution plate; and/or optionally wherein the plurality of gas apertures are non-uniform in size, and the size of the plurality of gas apertures increases along a first end-to-second end direction of the gas distribution plate.
5. The gas processing column of clause 1, wherein the one or more gas apertures is a single gas aperture that converges toward the first end of the gas distribution plate and diverges toward the second end of the gas distribution plate.
6. A gas processing column comprising:
   a column shell extending along a central axis and having an internal volume with a gas inlet entering into a lower portion thereof and a gas outlet passing through a top wall of the column shell and offset from the central axis;
   a gas distribution plate having a first end and a second end, and one or more gas apertures that are arranged along the gas distribution plate and extend therethrough;
   wherein an aperture area of the gas distribution plate is defined by the one or more gas apertures and increases along a first end-to-second end direction of the gas distribution plate; and
   wherein the gas distribution plate is positioned in the internal volume and is oriented such that the first end of the gas distribution plate is closer to the gas outlet than the second end.
7. The gas processing column of clause 6, wherein walls of the column shell define a gas flow path through the column shell that extends from the gas inlet, through the one or more gas apertures in the gas distribution plate, to the gas outlet; optionally, wherein the one or more gas apertures are positioned within the gas flow path to reduce a flow rate of a portion of the gas flow that is closer to the gas outlet while increasing a flow rate of a portion of the gas flow that is farther away from the gas outlet.
8. The gas processing column of clause 6, wherein the one or more gas apertures is a plurality of gas apertures.
9. The gas processing column of clause 8, wherein the plurality of gas apertures in the gas distribution plate are all uniform in size and a frequency of occurrence of the plurality of gas apertures increases along a first end-to-second end direction of the gas distribution plate.
10. The gas processing column of clause 8, wherein the plurality of gas apertures in the gas distribution plate are non-uniform in size and the size of the plurality of gas apertures increases along a first end-to-second end direction of the gas distribution plate.
11. The gas processing column of clause 6, wherein the one or more gas apertures is a single gas aperture that converges toward a first end of the gas distribution plate and diverges toward the second end of the gas distribution plate.
12. A method of uniformly distributing a gas flow in a gas processing column having other than a centered top gas outlet comprising:
   a gas distribution plate within an internal volume of the gas processing column and in a gas flow path thereof, the gas distribution plate including one or more gas apertures arranged along the gas distribution plate between a first end and a second end thereof and extending through the gas distribution plate;
   passing a gas flow through the internal volume of the gas processing column along a gas flow path from a gas inlet through the gas distribution plate to the gas outlet;
   wherein an aperture area of the gas distribution plate is defined by the one or more gas apertures and increases along a first end-to-second end direction of the gas distribution plate; and
   wherein the gas distribution plate is positioned in the internal volume upstream of the gas outlet and is oriented such that the first end of the gas distribution plate is closer to the gas outlet than the second end so as to cause a uniform distribution of the gas flow through the internal volume.
13. The method of clause 12, wherein the one or more gas apertures of the gas distribution plate reduces a flow rate of a portion of the gas flow that is closer to the gas outlet and increases a flow rate of a portion of the gas flow that is farther away from the gas outlet.
14. The method of clause 12, wherein the one or more gas apertures is a plurality of gas apertures; optionally, wherein the plurality of gas apertures are all uniform in size, and a frequency of occurrence of the plurality of gas apertures increases along a first end-to-second end direction of the gas distribution plate; and/or optionally wherein the plurality of gas apertures are non-uniform in size, and the size of the plurality of gas apertures increases along a first end-to-second end direction of the gas distribution plate.
15. The method of clause 12, wherein the one or more gas apertures is a single gas aperture that converges toward a first end of the gas distribution plate and diverges toward the second end of the gas distribution plate.

## Claims

1. A gas processing column comprising:
a processing chamber having an internal volume with a gas inlet entering into a lower portion thereof and a gas outlet exiting an upper portion thereof,
wherein the gas processing column has a central axis and the gas outlet of the processing chamber is offset from said central axis;
a gas distribution plate having a first end and a second end, and one or more gas apertures that are arranged along the gas distribution plate and extend therethrough;
wherein an aperture area of the gas distribution plate is defined by the one or more gas apertures and increases along a first end-to-second end direction of the gas distribution plate; and
wherein the gas distribution plate is positioned in the internal volume between the gas inlet and gas outlet and is oriented such that the first end of the gas distribution plate is closer to the gas outlet than the second end.

2. The gas processing column of claim 1, wherein the one or more gas apertures is a plurality of gas apertures.

3. The gas processing column of claim 2, wherein a frequency of occurrence of the plurality of gas apertures increases along a first end-to-second end direction of the gas distribution plate.

4. The gas processing column of claim 3, wherein the plurality of gas apertures are all uniform in size.

5. The gas processing column of claim 2 or claim 3, wherein the plurality of gas apertures are non-uniform in size, and the size of the plurality of gas apertures increases along a first end-to-second end direction of the gas distribution plate.

6. The gas processing column of claim 1, wherein the one or more gas apertures is a single gas aperture that converges toward the first end of the gas distribution plate and diverges toward the second end of the gas distribution plate.

7. The gas processing column of any preceding claim wherein the gas outlet passes through a top wall of the processing chamber.

8. The gas processing column of any of claims 1 to 6, wherein the gas processing column comprises an exhaust chamber including a second gas outlet, and
wherein the exhaust chamber is fluidly connected to the processing chamber via the gas outlet of the processing chamber.

9. The gas processing chamber of claim 8, wherein walls of the processing chamber and the exhaust chamber collectively define a gas flow path through the gas processing chamber that extends from the gas inlet, through the one or more gas apertures in the gas distribution plate, to the second gas outlet.

10. The gas processing column of claim 9, wherein the one or more gas apertures of the gas distribution plate are positioned within the gas flow path to reduce a flow rate of a portion of the gas flow that is closer to the second gas outlet while increasing a flow rate of a portion of the gas flow that is farther away from the second gas outlet.

11. The gas processing column of any of claims 8 to 10, wherein the gas processing column includes a column shell having a bottom wall, top wall and at least one side wall;
wherein the second gas outlet of the exhaust chamber is positioned in the at least one side wall; optionally, wherein the gas inlet is positioned in the at least one side wall or the bottom wall.

12. A method of uniformly distributing a gas flow in a gas processing column, the method comprising
providing a gas processing column including:
a processing chamber having an internal volume with a gas inlet entering into a lower portion thereof and a gas outlet exiting an upper portion thereof,
wherein the gas processing column has a central axis and the gas outlet of the processing chamber is offset from said central axis; and
a gas distribution plate within the internal volume of the processing chamber upstream of the gas outlet and in a gas flow path thereof, the gas distribution plate including one or more gas apertures arranged along the gas distribution plate between a first end and a second end thereof and extending through the gas distribution plate;
passing a gas flow through the internal volume of the gas processing column along the gas flow path from the gas inlet through the gas distribution plate to the gas outlet;
wherein an aperture area of the gas distribution plate is defined by the one or more gas apertures and increases along a first end-to-second end direction of the gas distribution plate; and
wherein the gas distribution plate is oriented such that the first end of the gas distribution plate is closer to the gas outlet than the second end so as reduce a flow rate of a portion of the gas flow that is closer to the gas outlet and increase a flow rate of a portion of the gas flow that is farther away from the gas outlet.

13. The method of claim 12, wherein the one or more gas apertures is a plurality of gas apertures.

14. The method of claim 13, wherein a frequency of occurrence of the plurality of gas apertures increases along a first end-to-second end direction of the gas distribution plate; and/or
optionally, wherein the plurality of gas apertures are non-uniform in size, and the size of the plurality of gas apertures increases along a first end-to-second end direction of the gas distribution plate.

15. The method of claim 12, wherein the one or more gas apertures is a single gas aperture that converges toward a first end of the gas distribution plate and diverges toward the second end of the gas distribution plate.
